(19)

Europäisches
Patentamt
European
Patent Office
Office européen
des brevets

(11)  **EP 3 343 515 A1**

(12)  **EUROPEAN PATENT APPLICATION**

(43) Date of publication:
04.07.2018  Bulletin 2018/27

(51) Int Cl.:
*G06T 19/00* (2011.01)     *G06T 15/20* (2011.01)

(21) Application number: **17002070.5**

(22) Date of filing: **22.12.2017**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA MD TN** | (71) Applicant: **CANON KABUSHIKI KAISHA**<br>**Tokyo (JP)**<br><br>(72) Inventors:<br>• **Yoshimura, Kazuhiro**<br>  **Tokyo (JP)**<br>• **Imai, Ayato**<br>  **Tokyo (JP)** |
| (30) Priority:  **27.12.2016   JP 2016253276** | (74) Representative: **WESER & Kollegen**<br>**Radeckestraße 43**<br>**81245 München (DE)** |

(54)  **SETTING APPARATUS TO SET MOVEMENT PATH OF VIRTUAL VIEWPOINT, SETTING METHOD, AND PROGRAM**

(57)    A setting apparatus (100) that sets a movement path of a virtual viewpoint, the setting apparatus including: a specification unit (301,302) configured to specify one or a plurality of virtual viewpoints and an object of interest; and a setting unit (306,307) configured to set, based on the one or the plurality of virtual viewpoints and the object of interest specified by the specification unit, the movement path of the virtual viewpoint such that a difference of image quality between objects of interest falls within a predetermined range, the object of interest existing in each of a plurality of virtual viewpoint images generated in accordance with the movement path of the virtual viewpoint.

FIG.7

**Description**

BACKGROUND OF THE INVENTION

Field of the Invention

The present invention relates to a setting method of a movement path of a virtual viewpoint relating to a virtual viewpoint video image.

Description of the Related Art

As a technique to reproduce a video image from a camera (virtual camera) that does not actually exist, which is arranged virtually in a three-dimensional space, by using a multi-viewpoint video image captured by a plurality of real cameras, there is a virtual viewpoint video image technique. As one of generation methods of a virtual viewpoint video image, there is a method of obtaining a virtual viewpoint video image by estimating a three-dimensional shape of an object from a multi-viewpoint video image obtained by capturing images of the object from the positions that surround the object and by performing texture mapping of the captured images onto the surface the three-dimensional shape that is found. At this time, which viewpoint is used for a captured image in texture mapping depending on the position of the virtual viewpoint desired to be generated will largely affect the image quality of the virtual viewpoint video image. Regarding this point, Japanese Patent Laid-Open No. 2010-20487 has disclosed a technique to implement a high image quality by calculating a blend ratio at the time of image combination based on the optical axis direction of the virtual viewpoint desired to be generated and the optical axis direction of the image capturing viewpoint and by increasing the weight at the time of combination of the captured image whose optical axis direction of the image capturing viewpoint is close to that of the virtual viewpoint.

However, with the technique of Japanese Patent Laid-Open No. 2010-20487, in the case where the blur amount (image quality) in the object area is different between captured images in the multi-viewpoint video image, a variation in the blur amount occurs in the finished virtual viewpoint video image. Specifically, in the case where the captured image in which the object in the virtual viewpoint video image is in focus and the captured image in which the object is not in focus exist mixedly, a difference in the blur amount arises between the frame in which texture mapping is performed for the former and the frame in which texture mapping is performed for the latter. Such a virtual viewpoint video image will give a feeling of incongruity to a viewer, and therefore, undesirable.

SUMMARY OF THE INVENTION

The present invention in its first aspect provides a setting apparatus as specified in claims 1 to 7.
The present invention in its second aspect provides a setting method as specified in claims 8 to 10.
The present invention in its third aspect provides a program as specified in claims 11 to 13.
Further features of the present invention will become apparent from the following description of exemplary embodiments with reference to the attached drawings.

BRIEF DESCRIPTION OF THE DRAWINGS

FIG. 1 is a diagram showing an example of a hardware configuration of an image processing apparatus;
FIG. 2A and FIG. 2B are diagrams showing an example of camera arrangement to acquire multi-viewpoint video images;
FIG. 3 is a function block diagram of an image processing apparatus according to a first embodiment;
FIG. 4A is a diagram showing an optical axis of a camera and FIG. 4B is a diagram showing a path of a virtual viewpoint;
FIG. 5A is a diagram showing a path of a virtual viewpoint and FIG. 5B is a diagram showing a distance between an object and an actual gaze point;
FIG. 6 is a diagram showing a degree of blur of a virtual viewpoint image;
FIG. 7 is a flowchart showing a flow of virtual viewpoint video images generation processing according to the first embodiment;
FIG. 8A and FIG. 8B are each a diagram showing an example of a virtual viewpoint image;
FIG. 9 is a function block diagram of an image processing apparatus according to a second embodiment;
FIG. 10 is a flowchart showing a flow of virtual viewpoint video images generation processing according to the second embodiment;

FIG. 11 is a diagram showing an example of a UI screen for camera work setting;

FIG. 12 is a diagram showing a state where a start point setting bar and an end point setting bar are displayed within a camera work setting area;

FIG. 13 is a diagram showing an example of a virtual viewpoint candidate; and

FIG. 14 is a diagram showing an example of a virtual viewpoint candidate.

DESCRIPTION OF THE EMBODIMENTS

In the following, with reference to the attached drawings, the present invention is explained in detail in accordance with preferred embodiments. The configurations shown in the following embodiments are merely exemplary and the present invention is not limited to the configurations shown schematically.

(First embodiment)

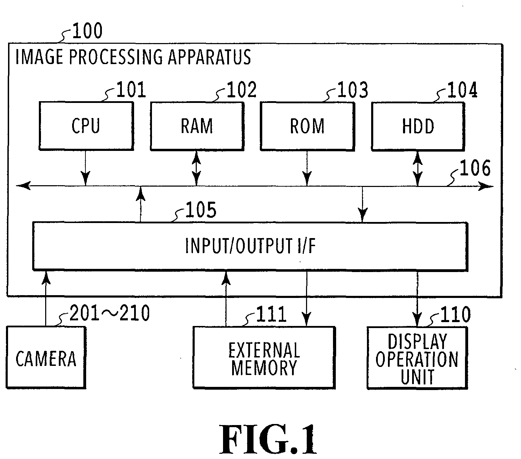

FIG. 1 is a diagram showing an example of a hardware configuration of an image processing apparatus 100. The image processing apparatus 100 of the present embodiment has a function as a setting apparatus that sets a movement path of a virtual viewpoint. The image processing apparatus 100 includes a CPU 101, a RAM 102, a ROM 103, an HDD 104, and an input/output I/F 105. Then, each unit making up the image processing apparatus 100 is connected to one another by a system bus 106. The image processing apparatus 100 may have each unit shown in FIG. 1 in plurality. Further, the image processing apparatus 100 is connected to cameras 201 to 210, a display operation unit 110, and an external memory 111 via the input/output I/F 105.

The CPU 101 executes programs stored in the ROM 103 by using the RAM 102 as a work memory and centralizedly controls each unit of the image processing apparatus 100 via the system bus 106. Due to this, various kinds of processing, to be described later, are implemented. The HDD 104 is a large-capacity storage device that stores various pieces of data handled in the image processing apparatus 100 and may be, for example, an SSD and the like. It is possible for the CPU 101 to write data to the HDD 104 and to read data stored in the HDD 104 via the system bus 106.

The input/output I/F 105 is, for example, a serial bus I/F, such as USB and IEEE 1394, and various pieces of data, commands, and so on, are input and output between an external device and the image processing apparatus 100 via the input/output I/F 105. The external memory 111 is a storage medium, for example, such as a hard disk, a memory card, a CF card, an SD card, and a USB memory. The display operation unit 110 includes, for example, a liquid crystal display having a touch panel function and displays information necessary for a user and acquires instructions from a user via the UI screen. The components of the image processing apparatus 100 exist other than those described above, but they are not the main purpose of the present invention, and therefore, explanation thereof is omitted.

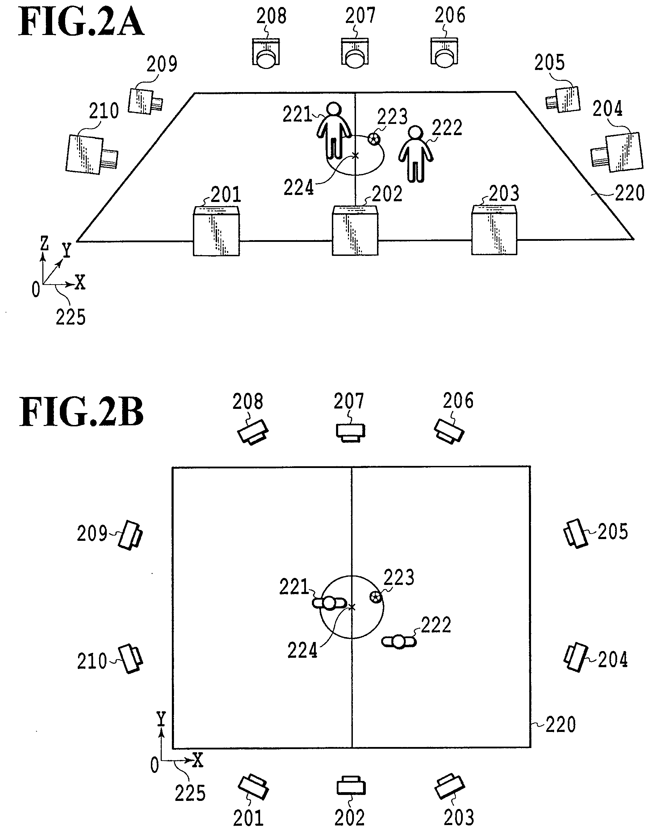

FIG. 2A and FIG. 2B are diagrams showing an example of camera arrangement to acquire a multi-viewpoint video image, in which a disparity exists, by capturing images from a plurality of different viewpoints. FIG. 2A and FIG. 2B represent the way images of players 221 and 222 and a ball 223 existing on a field 220 are captured by the ten cameras 201 to 210 arranged so as to surround the filed 220 as an image capturing-target area. FIG. 2A shows the camera arrangement in the case where the camera arrangement is viewed from the side and FIG. 2B shows the camera arrangement in the case where the camera arrangement is viewed from a bird' eye. In the present embodiment, all the cameras 201 to 210 are arranged so that a × mark 224 is the gaze point of all the cameras 201 to 210. Here, the gaze point refers to a point that is located on the optical axis of each of the cameras 201 to 210 and which is in focus. It is assumed that each of the cameras 201 to 210 has a lens whose focal length is the same and that the number of pixels of the image sensing element possessed by each camera is also the same. The number, the configuration, and the arrangement of cameras used for image capturing are not limited to those in the above-described example. Further, the gaze point, the focal length, and the number of pixels of the image sensing element of each camera may be different from one another. Furthermore, in the present embodiment, a multi-viewpoint video image is captured by a plurality of cameras corresponding to each image capturing viewpoint, but it may also be possible to acquire a multi-viewpoint video image by one or a plurality of cameras performing image capturing a plurality of times while changing the viewpoint.

A coordinate system 225 indicates a coordinate system that is used to specify the position of a camera and the like. The field 220 as an image capturing-target area, which is a rectangular area on an xy-plane, is the range that is the target of image processing in the present embodiment. The captured image data by the cameras 201 to 210 is sent to the image processing apparatus 100 as multi-viewpoint video image data and predetermined image processing is performed therefor.

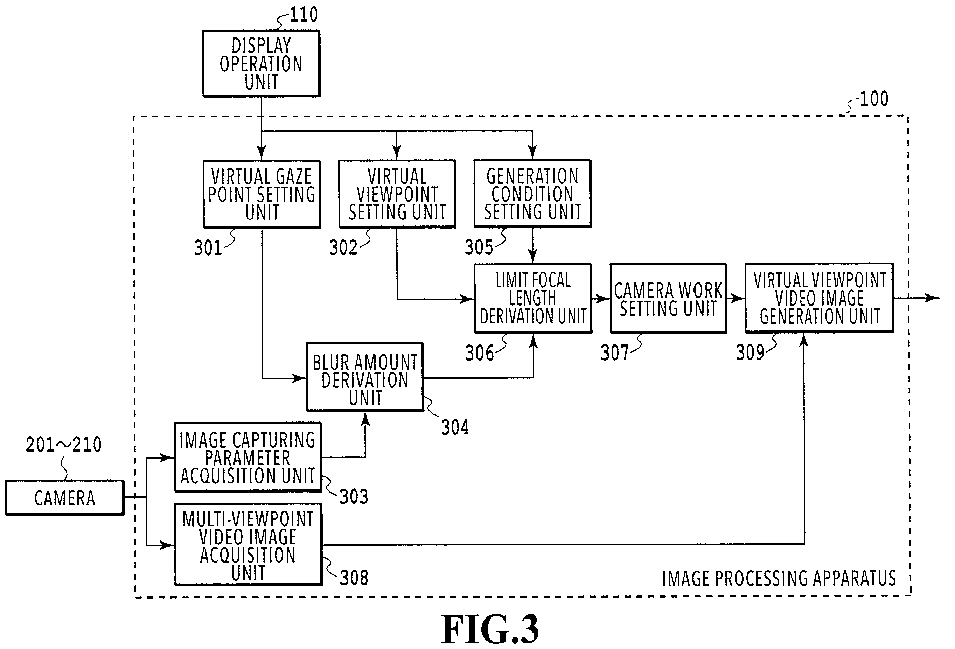

Following the above, virtual viewpoint video image generation processing that is performed in the image processing apparatus 100 is explained. FIG. 3 is a function block diagram of the image processing apparatus 100 according to the present embodiment. The image processing apparatus 100 includes a virtual gaze point setting unit 301, a virtual viewpoint setting unit 302, an image capturing parameter acquisition unit 303, a blur amount derivation unit 304, a generation condition setting unit 305, a limit focal length derivation unit 306, a camera work setting unit 307, a multi-viewpoint video image acquisition unit 308, and a virtual viewpoint video image generation unit 309. In the following, each unit is explained.

The virtual gaze point setting unit 301 sets the position of a point (virtual gaze point) at which a virtual camera for a virtual viewpoint video image gazes. This position is represented in the coordinate system 225. In the case where the virtual gaze point changes within a target time frame of a virtual viewpoint video image that is generated, the locus of the changing positions is set. This setting is performed based on a user input via the UI screen that is displayed on the display operation unit 110. Alternatively, it may also be possible to acquire information on the position coordinates determined and stored in advance from the HDD 104 and the like.

The virtual viewpoint setting unit 302 sets a position (virtual viewpoint) of the virtual camera in each frame at the time of virtual viewpoint video image generation. This setting is also performed based on a user input via the UI screen that is displayed on the display operation unit 110. Alternatively, it may also be possible to find the position by a calculation based on position information on the virtual gaze point set by the virtual gaze point setting unit 301. For example, virtual viewpoints that describe a circular locus in the case where a target object, which is a virtual gaze point, is fixed at a position (xd, yd, zd) in the entire range of a target time frame and a virtual viewpoint video image that surrounds the target object (360 degrees around the target object) are expressed by expression (1) below.

$$V_m \begin{pmatrix} x \\ y \\ z \end{pmatrix} = \begin{pmatrix} x_d + r * \cos\theta_m \\ y_d + r * \sin\theta_m \\ z_d \end{pmatrix}$$

(Mathematical expression (1))

In expression (1) described above, m indicates the frame number, $V_m$ (x, y, z) indicates the viewpoint position of the virtual camera in each frame, r indicates the radius of a circle, and $\theta_m$ indicates the direction of the virtual viewpoint in each frame, respectively.

The image capturing parameter acquisition unit 303 acquires image capturing parameters of the cameras 201 to 210. In the following, typical image capturing parameters are listed.

- positions (x201, y201, z201) to (x210, y210, z210) of the respective cameras 201 to 210
- attitudes ($\alpha$201, $\beta$201, $\gamma$201) to ($\alpha$210, $\beta$210, $\gamma$210) of the respective cameras 201 to 210
- gaze point position (xl, yl, zl) of the cameras 201 to 210
- lens focal lengths f201 to f210
- lens main point positions (cx201, cy201) to (cx210, cy210)
- F values (F201) to (F210) of the cameras 201 to 210
- image sensing element sizes (w201, h201) to (w210, h210)
- image sensing element resolutions (Rcx201, Rcy201) to (Rcx210, Rcy210)

These image capturing parameters are stored in advance in the HDD 104, or alternatively, these image capturing parameters are acquired by performing camera calibration using the publicly known zhang method (see Z. Zhang, "A flexible new technique for camera calibration", IEEE Transactions on Pattern Analysis and Machine Intelligence, 22 (11) : 1330 - 1334, 2000) and the like.

The blur amount derivation unit 304 derives the amounts of blur at the virtual gaze points of the multi-viewpoint video image captured by the cameras 201 to 210 based on the virtual gaze points set by the virtual gaze point setting unit 301 and the image capturing parameters acquired by the image capturing parameter acquisition unit 303. The blur amount is an example of the parameter relating to image quality and various names exist other than the blur amount. In the present embodiment, it is assumed that the blur amount is one that is represented by a numerical value, that is, the number of pixels of an image of an infinitesimally small point on the image sensing element (sensor) in the case where the image of the point is captured. It is possible to find a blur amount ($Bx_n$, $By_n$) by expression (2) below.

$$Bx_n = \frac{fx^2{}_n * \left\| \left| \overrightarrow{\mathbf{L_n}} \right| - \left| \frac{\overrightarrow{\mathbf{L_n}} \cdot \overrightarrow{\mathbf{D_n}}}{\left| \overrightarrow{\mathbf{L_n}} \right|^2} \overrightarrow{\mathbf{L_n}} \right| \right\|}{\left| \frac{\overrightarrow{\mathbf{L_n}} \cdot \overrightarrow{\mathbf{D_n}}}{\left| \overrightarrow{\mathbf{L_n}} \right|^2} \overrightarrow{\mathbf{L_n}} \right| * \left| \overrightarrow{\mathbf{L_n}} \right| * F_n * Px_n}$$

$$By_n = \frac{fy^2{}_n * \left\| \left| \overrightarrow{\mathbf{L_n}} \right| - \left| \frac{\overrightarrow{\mathbf{L_n}} \cdot \overrightarrow{\mathbf{D_n}}}{\left| \overrightarrow{\mathbf{L_n}} \right|^2} \overrightarrow{\mathbf{L_n}} \right| \right\|}{\left| \frac{\overrightarrow{\mathbf{L_n}} \cdot \overrightarrow{\mathbf{D_n}}}{\left| \overrightarrow{\mathbf{L_n}} \right|^2} \overrightarrow{\mathbf{L_n}} \right| * \left| \overrightarrow{\mathbf{L_n}} \right| * F_n * Py_n}$$

(Mathematical expression (2))

In expression (2) described above, $Bx_n$ indicates the blur amount in the horizontal direction of an object in an image captured by a camera n and $By_n$ indicates the blur amount in the vertical direction. $L_n$ is a vector from the position of the camera n to the position in focus and expressed by expression (3) below. $D_n$ is a vector from the position of the camera n to the virtual gaze point position and expressed by expression (4) below. $(Px_n, Py_n)$ indicates the size of one pixel on the image sensing element and is expressed by expression (5) below.

$$\overrightarrow{\mathbf{L_n}} = \begin{pmatrix} x_l - x_n \\ y_l - y_n \\ z_l - z_n \end{pmatrix}$$

(Mathematical expression (3))

$$\overrightarrow{\mathbf{D_n}} = \begin{pmatrix} x_d - x_n \\ y_d - y_n \\ z_d - z_n \end{pmatrix}$$

(Mathematical expression (4))

$$Px_n = \frac{w_n}{Rcx_n} \quad , \quad Py_n = \frac{h_n}{Rcy_n}$$

(Mathematical expression (5))

The calculation method of a blur amount (evaluation method of image quality) is not limited to the method using the above-described expressions. For example, it may also be possible to calculate a blur amount based on sharpness of an edge of an object, which is detected in a multi-viewpoint image. Further, for example, in the case where a face is photographed in a multi-viewpoint image, it may also be possible to calculate a blur amount based on detection results of parts of the face.

The generation condition setting unit 305 sets generation conditions of a virtual viewpoint video image that is generated, specifically, an output resolution Rd, an allowable blur amount (allowable value of blur amount) b', a target time frame of an input multi-viewpoint video image, and so on. The output resolution Rd, the allowable value of blur amount b', and the target time frame are input by a user via the display operation unit 110.

The limit focal length derivation unit 306 drives a range in which a zoom is possible (limit focal length) at each position on the path of the set virtual viewpoint. This limit focal length is derived as follows. First, based on the position coordinates of the virtual viewpoint, the position coordinates of the object, the position coordinates of the virtual gaze point, and the image capturing parameters, a reference image used for generation of an image viewed from a position on the path of the virtual viewpoint, on which attention is focused (hereinafter, virtual viewpoint position of interest), is determined. Specifically, by expression (6) below, an optical axis vector C at the virtual viewpoint position is calculated, an inner product E of the calculated optical axis vector C and an optical axis vector Ln is found for all the cameras by expression (7) below, and the captured image of the camera n whose inner product E is the largest is selected as a reference image.

$$\vec{\mathbf{C}} = \begin{pmatrix} x_d - x_v \\ y_d - y_v \\ z_d - z_v \end{pmatrix}$$

(Mathematical expression (6))

$$E = \left| \vec{\mathbf{C}} \cdot \vec{\mathbf{L}}_{\mathbf{n}} \right|$$

(Mathematical expression (7))

After this, based on the image capturing parameters of the camera n corresponding to the selected captured image, the blur amount in the vicinity of the object, the output resolution set by the generation condition setting unit 305, and the allowable value of blur amount, a limit value f' of the focal length within which a zoom is possible at the virtual viewpoint position is found by expression (8) below.

$$\frac{bd}{f} \times \frac{\vec{\mathbf{C}} \cdot \vec{\mathbf{L}}_{\mathbf{n}}}{\left| \vec{C} \right| \left| \vec{\mathbf{L}}_{\mathbf{n}} \right|} = \frac{b'd'}{f'} \times \frac{R_c}{R_d}$$

(Mathematical expression (8))

In expression (8) described above, b indicates the blur amount in the vicinity of the object of the reference image, d indicates the distance from the camera n that captures the reference image to the virtual gaze point, f indicates the focal length at the time of capturing the reference image, b' indicates the allowable value of blur amount, d' indicates the distance from the virtual viewpoint position to the virtual gaze point, Rc indicates the resolution of the camera n, and Rd indicates the output resolution. Further,

$$\frac{\vec{\mathbf{C}} \cdot \vec{\mathbf{L}}_{\mathbf{n}}}{\left| \vec{C} \right| \left| \vec{\mathbf{L}}_{\mathbf{n}} \right|}$$

(Mathematical expression (9))

expresses a cosine of the angle formed by an optical axis L of the reference image and the optical axis C at the virtual viewpoint position. Here, it is assumed that the sensor size of the virtual camera is the same as the sensor size of the camera n corresponding to the selected captured image. The image viewed from the virtual viewpoint position (virtual viewpoint image) has an infinite depth field, and therefore, a blur does not occur in the image, which is caused by the object being out of focus. Consequently, in expression (8) described above, only the influence of the blur amount of the input captured image on the virtual viewpoint image is considered. In the case where the focal length at the virtual viewpoint position is shorter than the calculated limit focal length f', the blur amount of the virtual viewpoint image that is generated becomes smaller than or equal to the allowable value of blur amount, and therefore, it is possible to generate an appropriate image.

In the present embodiment, based on the set virtual viewpoint, by substituting the distance d' from each position on the path of the virtual viewpoint to the virtual gaze point in expression (8) described above as a fixed value, the limit focal length f' is found. However, it may also be possible to find the limit distance d' of the virtual viewpoint that can be approached by determining the focal length of the virtual viewpoint in advance. Alternatively, it may also be possible to find the value of f'/d' in order to obtain an appropriate combination of the focal length and the distance from the virtual viewpoint position to the virtual gaze point. Further, in the present embodiment, a single reference image is selected, but it may also be possible to select a plurality of reference images. For example, the configuration may be one in which a weight of each captured image is found based on the value of the inner product E and captured images of a plurality of cameras are selected as reference images, and then, image combination is performed by using a plurality of reference images selected by the virtual viewpoint video image generation unit 309, to be described later. As the limit focal length in this case, it may be possible to use the smallest value of a plurality of limit focal lengths found based on each selected captured image, a value obtained by performing weighted addition of the plurality of limit focal lengths, and so on.

The camera work setting unit 307 sets a camera work at the time of virtual viewpoint video image generation. Here, the camera work means a set of parameters, such as the virtual viewpoint necessary for generation of a virtual viewpoint video image in the target time frame, the virtual gaze point, and the focal length of the virtual camera. In the present embodiment, the focal length at the time of virtual viewpoint image generation at each virtual viewpoint position is set so that the focal length changes smoothly in the range that does not exceed the limit focal length derived by the limit focal length derivation unit 306 at the virtual viewpoint set by the virtual viewpoint setting unit 302.

The multi-viewpoint video image acquisition unit 308 acquires multi-viewpoint video image data that is a set of captured images acquired by each of the cameras 201 to 210. The acquired multi-viewpoint video image data is input to the virtual viewpoint video image generation unit 309.

The virtual viewpoint video image generation unit 309 generates the virtual viewpoint image at each virtual viewpoint position based on the camera work set by the camera work setting unit 307 and the multi-viewpoint video image data that is input from the multi-viewpoint video image acquisition unit 308 and generates a virtual viewpoint video image by linking the virtual viewpoint image. For generation of a virtual viewpoint video image, it is possible to use View dependent rendering described in A Robust Free-Viewpoint System VIDEO for Sport Scenes, Proceeding of 3D TV conference 2007, Oliver Grau et al.

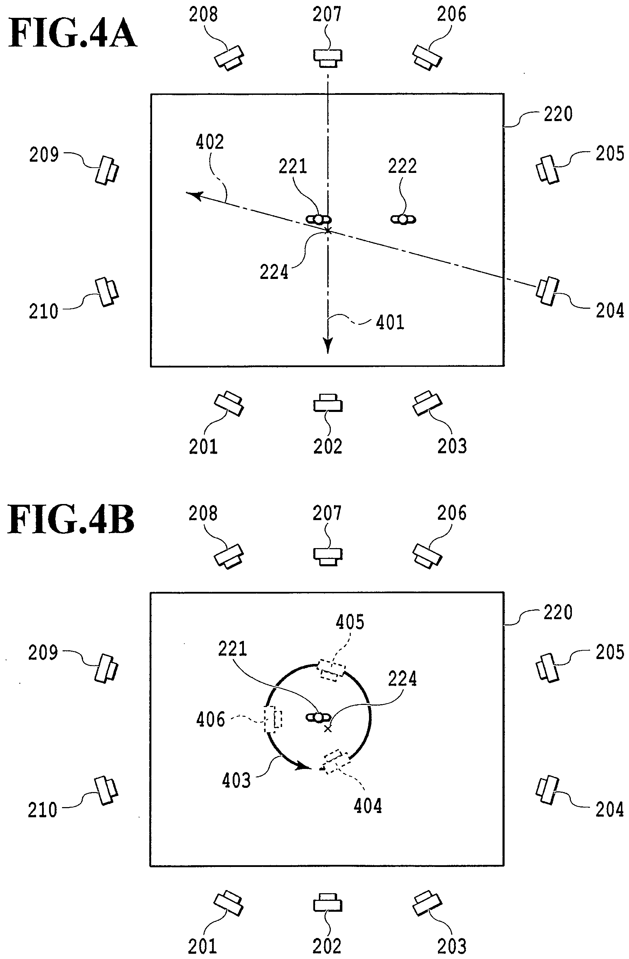

Before explaining a specific flow of the virtual viewpoint video image generation processing in the image processing apparatus 100 having the above-described configuration, the problem to be solved by the present invention is reviewed here again. FIG. 4A is a diagram showing the optical axes of part of the cameras in the camera arrangement shown in FIGS. 2A and 2B. In FIG. 4A, an arrow line 401 indicates the optical axis of the camera 207 and an arrow line 402 indicates the optical axis of the camera 204.

First, the case is explained where the virtual gaze point is located at the position of the object 221 (in the vicinity of the actual gaze point 224). FIG. 4B is a diagram showing a path of the virtual viewpoint, which goes round the object 221 in a counterclockwise direction, by an arrow line 403. In FIG. 4B, three cameras 404 to 406 indicated by broken lines on the arrow line 403 indicate arbitrary positions on the path of the virtual viewpoint. Here, a blur amount $(Bx_{207}, By_{207})$ in the vicinity of the object in the captured image of the camera 207 is found by using expression (5) described previously. In this case, the value indicating the difference between the distance from the camera 207 to the actual gaze point 224 on the optical axis 401 and the distance from the camera 207 to the object expressed by

$$\left| \frac{\overrightarrow{L_n} \cdot \overrightarrow{D_n}}{\left| \overrightarrow{L_n} \right|^2} \overrightarrow{L_n} \right| \qquad \text{(Mathematical expression (10))}$$

is small, and therefore, both the blur amount $Bx_{207}$ and the blur amount $By_{207}$ are small values. Similarly, also in the case where the blur amount $(Bx_n, By_n)$ of the other cameras including the camera 204 is found, the blur amount of each captured image is small. In the case where a virtual viewpoint video image is generated by using these captured images, there is not a large difference between the amounts of blur in the vicinity of the object of the input captured image, and therefore, a large difference in the blur amount does not arise between the virtual viewpoint images generated at each of the virtual viewpoint positions of the virtual cameras 404, 405, and 406. In the case such as this, it is possible to generate a virtual viewpoint video image whose variation in the blur amount is small at any position on the virtual viewpoint path.

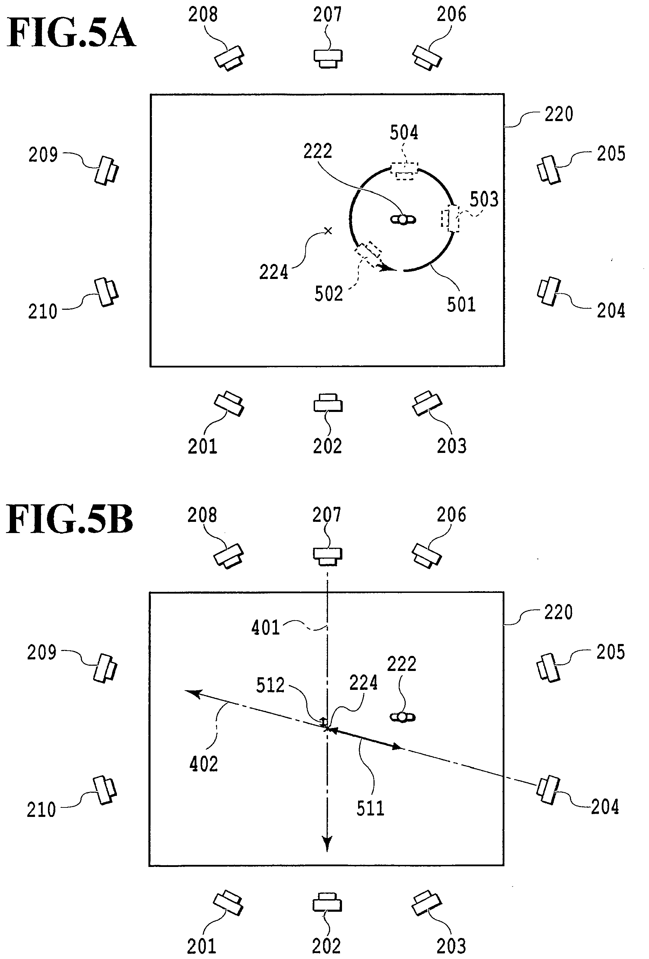

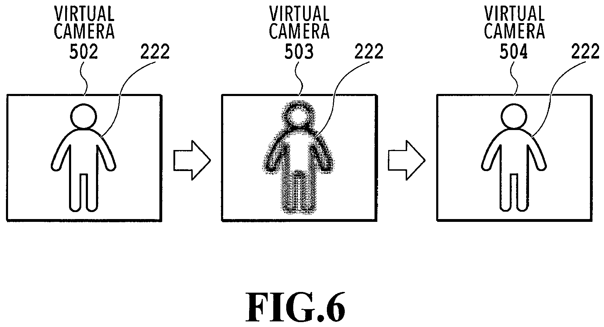

Next, the case is explained where the virtual gaze point is located at the position of the object 222 (position somewhat apart from the actual gaze point 224). That is, it is possible for the virtual gaze point setting unit 301 to set the object of interest (object 222) as a virtual gaze point. FIG. 5A is a diagram showing the path of a virtual viewpoint, which goes round the object 222 in a counterclockwise direction, by an arrow line 501. In FIG. 5A, three cameras 502 to 504 indicated by broken lines on the arrow line 501 indicate arbitrary virtual camera positions on the path of the virtual viewpoint. Further, FIG. 5B is a diagram corresponding to FIG. 4A, in which a bidirectional arrow line 511 indicates the distance between the object 222 and the actual gaze point 224 on the optical axis 402 of the camera 204 and a bidirectional arrow 512 indicates the distance between the object 222 and the actual gaze point 224 on the optical axis 401 of the camera 207. In this case, for the camera 204, the distance between the object 222 and the actual gaze point 224 on the optical axis 402 is long, and therefore, a blur amount $(Bx_{204}, By_{204})$ in the vicinity of the object is a large value. On the other hand, for the camera 207, the distance between the object 222 and the actual gaze point 224 on the optical axis 401 is short, and therefore, the blur amount $(Bx_{207}, By_{207})$ in the vicinity of the object is a small value. Further, for the other cameras, in accordance with the distance between the object 222 and the actual gaze point 224 on each optical axis, small values of the blur amount $(Bx_n, By_n)$ in the vicinity of the object and large values thereof exist mixedly. In the case where a virtual viewpoint video image is generated by using these captured images, on a condition that the virtual viewpoint image at each position on the virtual viewpoint path is generated with the same focal length, a large difference in the blur amount arises between the virtual viewpoint images generated at each position. FIG. 6 is a diagram showing a degree of blur of the virtual viewpoint image generated with a common focal length from each of the positions 502, 503, and 504 on the virtual viewpoint path for the object 222. The virtual viewpoint image generated at the position 503 becomes an image with a large blur because the captured image of the camera 204 is used and the virtual viewpoint images generated at the positions 502 and 504 become images with a small blur because the captured images of the camera 201 and the camera 207 are used, respectively. In the case where a virtual viewpoint video image is generated by linking virtual viewpoint images whose degrees of blur vary as described above, the video image will be one for which a viewer has a feeling of incongruity. This is the problem that is to be solved by the present invention.

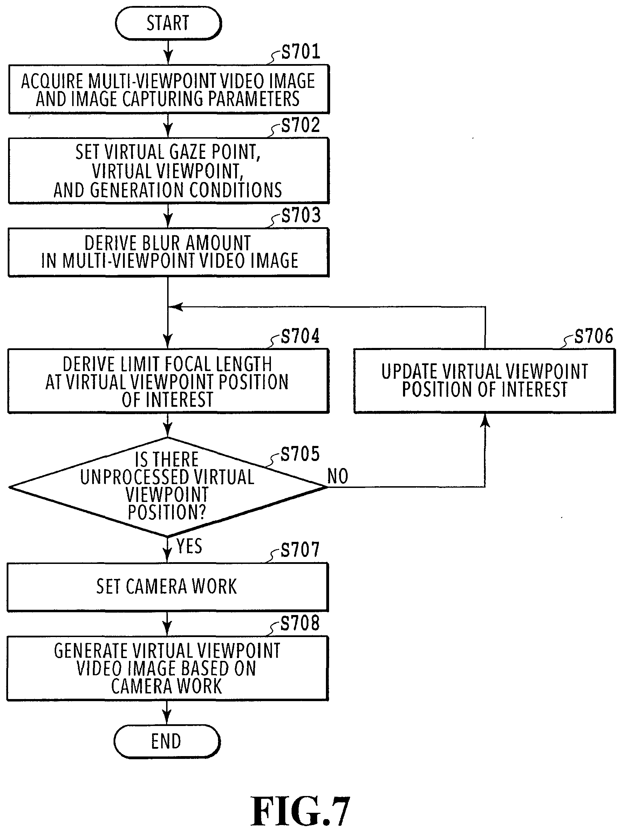

With the above in mind, a flow of the virtual viewpoint video image generation processing according to the present embodiment is explained in detail. FIG. 7 is a flowchart showing a flow of the virtual viewpoint video image generation processing according to the present embodiment. The series of processing shown below is implemented by the CPU 101 loading a predetermined program stored in the HDD 104 and the like onto the RAM 102 and executing the program.

At step 701, in the image capturing parameter acquisition unit 303, the image capturing parameters of the cameras 201 to 210 are acquired and in the multi-viewpoint video image acquisition unit 308, the multi-viewpoint video image data captured by the cameras 201 to 210 is acquired, respectively.

At step 702, fundamental information to generate a virtual viewpoint video image is set based on a user input. Specifically, in the virtual gaze point setting unit 301, one or a plurality of virtual gaze points is set, in the virtual viewpoint setting unit 302, one or a plurality of virtual viewpoints is set, and in the generation condition setting unit 305, the output resolution of a virtual viewpoint video image that is generated, the allowable value of blur amount, the target time frame, and so on, are set. It is not necessarily required to acquire all the parameters described above. For example, it may also be possible to acquire only one or a plurality of virtual viewpoints and one or a plurality of virtual gaze points as the fundamental information. Further, at step 702, it may also be possible to acquire the type of camera work (for example, the type in which the virtual camera is moved along a circle with the object of interest as a center, the type in which the virtual camera is moved along an ellipse, and so on) as the fundamental information.

At step 703, the blur amount derivation unit 304 derives the blur amount at the virtual gaze point set at step 702 for the multi-viewpoint video image acquired at step 701. Here, a specific example of derivation of blur amount is explained by taking the case in FIG. 5A and FIG. 5B described previously as an example. Here, it is assumed that the gaze point of the cameras 201 to 210 is a position $(x, y, z) = (0, 0, 1000)$ of the $\times$ mark 224 and the virtual gaze point of the virtual cameras 502 to 504 is the position $(xd, yd, zd) = (40000, -5000, 1000)$ of the object 222. The position Vm of the virtual camera in this case is found by expression (1) described previously and for example, in the case where r = 10000 and $\theta m$ = 0 degrees, the position Vm of the virtual camera 503 is $(50000, -5000, 1000)$. Then, the blur amount $(Bx_n, By_n)$ is found by expression (2) described previously and for example, for the cameras 203 and 204, the following will result. Here, it is assumed that the position of the camera 203 is $(45000, 80000, 1000)$ and the position of the camera 204 is $(90000, 15000, 1000)$. In this case, vectors $L_{203}$ and $L_{204}$ from the positions of the cameras 203 and 204, respectively, to the actual gaze point position, and vectors $D_{203}$ and $D_{204}$ from the positions of the cameras 203 and 204, respectively, to the virtual gaze point position will be as follows.

$$\overrightarrow{\mathbf{L}_{203}} = \begin{pmatrix} -45000 \\ -80000 \\ 0 \end{pmatrix} \qquad \overrightarrow{\mathbf{L}_{204}} = \begin{pmatrix} -90000 \\ -15000 \\ 0 \end{pmatrix}$$

$$\overrightarrow{\mathbf{D}_{203}} = \begin{pmatrix} -5000 \\ -85000 \\ 0 \end{pmatrix} \qquad \overrightarrow{\mathbf{D}_{204}} = \begin{pmatrix} -50000 \\ -20000 \\ 0 \end{pmatrix}$$

(Mathematical expression (11))

Then, in the case where it is assumed that the size $(Px_n, Py_n)$ of one pixel on the image sensing element is (5 μm, 5 μm), the focal length f is 100 mm, and the F value is 4, then, the amounts of blur $Bx_{203}$ and $Bx_{204}$ in the horizontal direction in the images captured by the cameras 203 and 204 will be

$$Bx_{203} = 45.76 / 8.45 = 5.41 \text{ pix}$$

and

$$Bx_{204} = 63.29 / 5.1003 = 12.41 \text{ pix},$$

respectively. In this manner, the amounts of blur $By_{203}$ and $By_{204}$ in the vertical direction are also found, and similarly for the captured images of the other cameras, the amount blur at the virtual gaze point position (xd, yd, zd) = (40000, -5000, 1000) is found.

At step 704, in the limit focal length derivation unit 306, the limit focal length at the position on which attention is focused (hereinafter, virtual viewpoint position) on the path of the virtual viewpoint set at step 702 is found by using expression (8) described previously. For example, in the case where the position relationship between the virtual viewpoint position and the virtual gaze point is a relationship as in FIG. 5A and FIG. 5B, it may be possible to substitute the blur amount at the position (xd, yd, zd) = (40000, -5000, 1000) in the selected reference image in expression (8) described previously as b. In this example, the limit focal length is shorter in the case where the virtual viewpoint image close to the camera 204 is generated than that in the case where the virtual viewpoint image close to the camera 203 is generated (that is, the range in which a zoom is possible becomes narrower and the angle of view becomes wider).

At step 705, whether the derivation of the limit focal length has been completed for all the positions on the path of the virtual viewpoint set at step 702 (that is, for the entire range of the set target time frame) is determined. In the case where the processing has been completed for all the positions on the virtual viewpoint path, the processing advances to step 707. On the other hand, in the case where there is an unprocessed virtual viewpoint position, the processing advances to step 706, and the virtual viewpoint position is updated and the processing at step 704 is repeated.

At step 707, in the camera work setting unit 307, based on the virtual viewpoint set at step 702 and the limit focal length at each virtual viewpoint position derived at step 705, a camera work (movement path of the virtual viewpoint) of the virtual viewpoint video image in the target time frame is set. At this time, a camera work setting reference is determined in advance and a camera work in accordance with the setting reference is determined automatically. As the setting reference, for example, it is considered that the focal length of each virtual viewpoint image is taken to be the limit value at the limit focal length at each virtual viewpoint position, or to be the shortest focal length of all the limit focal lengths at all the virtual viewpoint positions.

At step 708, in the virtual viewpoint video image generation unit 309, based on the camera work determined at step 707 and the multi-viewpoint video image data acquired at step 701, a virtual viewpoint video image is generated. In the case where the set target time frame is, for example, 10 sec and the multi-viewpoint video image data is captured at 60 fps, the above-described processing is performed for 60 (fps) × 10 (sec) = 600 frames. Further, in the case where the virtual gaze point also changes within the target time frame, in addition to the virtual viewpoint, it is sufficient to cause the processing to return to step 703 after performing updating of the virtual gaze point also at step 706 and to repeat the processing from the derivation of the blur amount. By the processing at steps 704 to 706, a difference of image quality at the virtual gaze point (for example, the object of interest 222) between each of the plurality of virtual viewpoint images generated in accordance with the movement path of the virtual viewpoint comes to fall within a predetermined range.

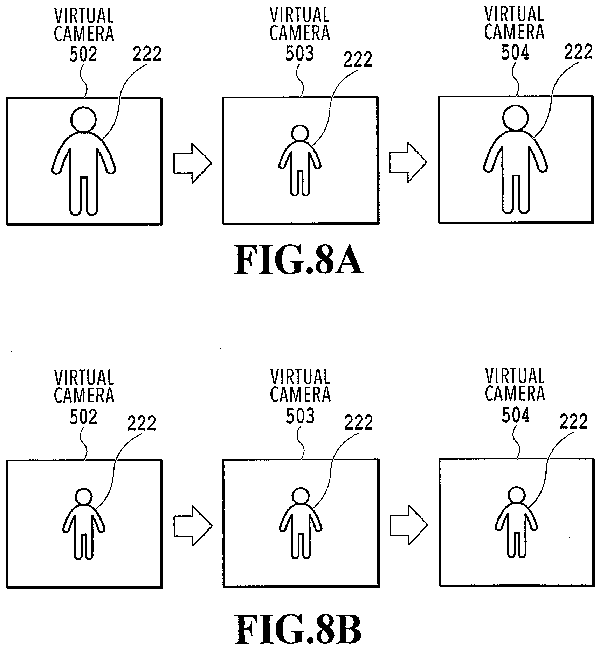

The above is the contents of the virtual viewpoint video image generation processing according to the present embodiment. FIG. 8A and FIG. 8B each show an example of a virtual viewpoint image obtained by applying the present embodiment. In the example in FIG. 8A, for the virtual viewpoint positions (virtual cameras 502 and 504) at which the blur amount of the reference image is small and the limit focal length is long, a virtual viewpoint image is generated, in which the object 222 is captured so as to be relatively large, by increasing the focal length. Further, for the virtual viewpoint position (virtual camera 503) at which the blur amount of the reference image is large and the limit focal length is short, a virtual viewpoint image is generated, in which the object 222 is captured so as to be relatively small, by reducing the focal length so that the blur amount falls within an allowable range. By setting the camera work in which the focal length of each reference image is adjusted based on the position relationship between the actual gaze point and the virtual gaze point as described above, it is possible to suppress a blur that exceeds the allowable value from occurring within the virtual viewpoint video image. Further, in the example in FIG. 8B, the focal length at each virtual viewpoint position is reduced in accordance with the virtual viewpoint position (virtual camera 503) at which the limit focal length is short and the object 222 is captured so as to be small in each virtual viewpoint image. By setting the camera work like this, it is also possible to suppress a feeling of incongruity caused by the object varying considerably in size in the virtual viewpoint video image generated by linking these virtual viewpoint images while preventing the blur amount from exceeding the allowable value in all the virtual viewpoint images. In each case of FIG. 8A and FIG. 8B, the virtual viewpoint image is generated by using the focal length shorter than the limit focal length for each virtual viewpoint position, and therefore, in the finished virtual viewpoint video image, the blur that gives a feeling of incongruity to a user is suppressed from occurring.

In the above-described example, the multi-viewpoint video image data is acquired in the previous stage of the processing, but the configuration may be one in which, for example, the multi-viewpoint video image data corresponding to the time frame is acquired after the camera work is determined. In the case where the multi-viewpoint video image data is acquired in the subsequent stage of the processing as described above, for example, it may also be possible to find the camera works in advance for the cases of all the object positions (virtual gaze point positions) that are considered. Then, it may also be possible to design the configuration in which a virtual viewpoint video image is generated by using a relevant camera work of the camera works found in advance for the object position specified by a user at the time of virtual viewpoint video image generation. Further, as a modification example of the above-described example, a case is also considered where only one or a plurality of virtual viewpoints and one or a plurality of virtual gaze points are acquired at step 702. In the case where one virtual viewpoint and one virtual gaze point are acquired as the fundamental information, the blur amount at the virtual gaze point is obtained based on the virtual viewpoint and the virtual gaze point. Then, it may also be possible for the movement path of the virtual viewpoint to be determined automatically from the blur amount so that the blur amount falls within a predetermined range. Further, in the case where a plurality of virtual viewpoints and one virtual gaze point are acquired as the fundamental information at step 702, the blur amount at the virtual gaze point at each of the plurality of virtual viewpoints is obtained. Then, it is possible to determine the movement path of the virtual viewpoint so that the blur amount falls between the maximum value and the minimum value of the plurality of amounts of blur. In the case where the difference between the maximum value and the minimum value of the blur amount is larger than or equal to a threshold value, it is convenient that a warning is issued to prompt a user to perform setting again. Further, it may also be possible for the type of camera work (for example, type in which the virtual camera is moved along a circle with the object of interest as a center, type in which the virtual camera is moved along an ellipse, and so on) to be acquired as the fundamental information. By doing so, the possibility that the camera work closer to the intention of a user can be set becomes stronger.

As above, according to the present embodiment, in the case where a virtual viewpoint video image is generated from multi-viewpoint video image data captured from a plurality of viewpoints, it is possible to suppress a blur that gives a feeling of incongruity to a user from occurring.

(Second embodiment)

In the first embodiment, the aspect is explained in which a limit focal length within which the blur amount of a virtual viewpoint image falls within an allowable range is found and a camera work is determined based on the limit focal length. Next, an aspect is explained as a second embodiment in which the focal length of a virtual camera is fixed and a user selects an appropriate camera work by using a GUI (Graphical User Interface).

Explanation of the basic configuration (FIG. 1) of the image processing apparatus and the camera arrangement (FIG. 2A) in common to those of the first embodiment is omitted and in the following, different points are explained mainly.

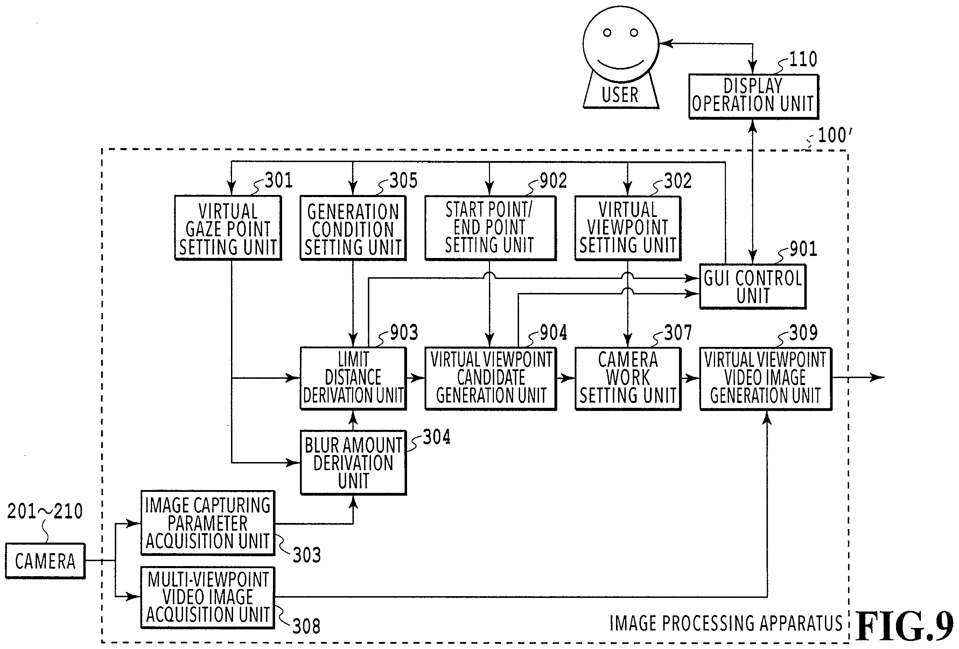

FIG. 9 is a function block diagram of an image processing apparatus 100' according to the present embodiment. The image processing apparatus 100' further includes a GUI control unit 901, a start point/end point setting unit 902, a limit distance derivation unit 903, and a virtual viewpoint candidate generation unit 904 in addition to those of the image processing apparatus 100. The virtual gaze point setting unit 301, the virtual viewpoint setting unit 302, the image capturing parameter acquisition unit 303, the blur amount derivation unit 304, the generation condition setting unit 305, the multi-viewpoint video image acquisition unit 308, and the virtual viewpoint video image generation unit 309 are basically in common to those of the first embodiment although part of the input/output information is different. An outline of each unit that does not exist in the first embodiment is as follows.

The GUI control unit 901 performs control of a GUI, specifically, performs processing to generate a UI screen capable of receiving user operations, such as specification and selection of various items relating to a camera work, and display the UI screen on the display control unit 110, to acquire instructions from a user via the UI screen, and to distribute the instructions to each unit.

The start point/end point setting unit 902 sets the positions of the start point and the end point of a virtual viewpoint based on the user instructions input via the UI screen, in more detail, the direction of the start point and the direction of the end point of the virtual viewpoint viewed from the virtual gaze point.

The limit distance derivation unit 903 derives the limit distance (zoom limit value) representing how close the virtual gaze point can be approached from each position of the virtual viewpoint for each direction viewed from the virtual gaze point.

The virtual viewpoint candidate generation unit 904 generates virtual viewpoint candidates for selection of a user, specifically, a plurality of candidates of the loci (paths of the virtual viewpoint) of the virtual camera under the condition that the inside of the limit distance derived by the limit distance derivation unit 903 is not entered.

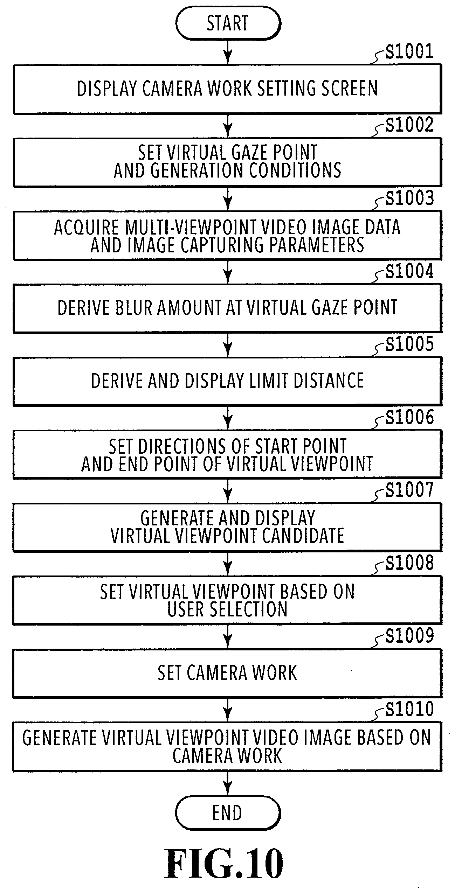

FIG. 10 is a flowchart showing a flow of virtual viewpoint video image generation processing according to the present embodiment. In the following flow, it is also assumed that the virtual gaze point is fixed for simplification of explanation.

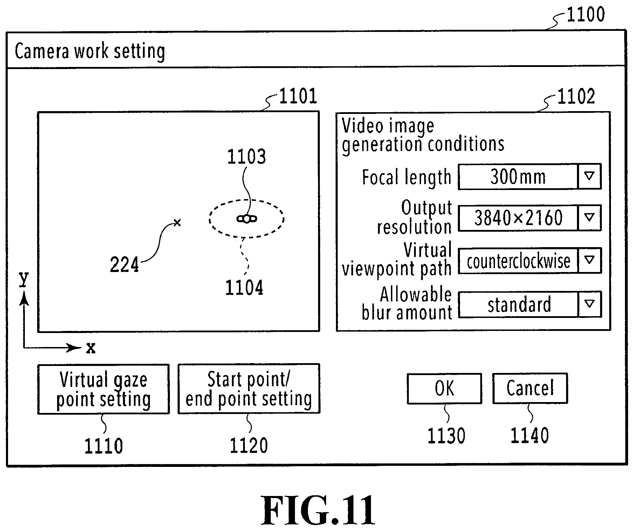

At step 1001, a UI screen on which for a user to perform camera work setting is displayed on the display operation unit 110 by the GUI control unit 901. FIG. 11 is a diagram showing an example of the UI screen for camera work setting. A rectangular area 1101 on the left side within a UI screen 1100 is a camera work setting area in which to specify the position of a virtual gaze point, to specify the start point and end point of a virtual viewpoint, to make a selection from among a plurality of virtual viewpoint candidates, and so on. The camera work setting area 1101 on the UI screen 1100 is displayed as a rectangular area on the xy-plane in the case where a predetermined range including the field 220 (see FIG. 2A) as an image capturing-target area is viewed from above. In the camera work setting area 1101, in order to cause a user to instinctively understand the position of an object, an image obtained by projecting the captured images acquired by the cameras 201 to 210 onto the plane and combining them is displayed. Further, for example, in the case where the image capturing scene is a match of soccer, it may also be possible to display information on the position of the goal post, the center line, the penalty area, and so on, which are already known, as an alternative of a combined display or a captured image. A rectangular area 1102 on the right side within the UI screen 1100 is a generation condition setting area in which to specify various parameters necessary for the virtual viewpoint video image generation. In the generation condition setting area 1102, pulldown menus are provided, in which a user can specify desired contents from alternatives prepared in advance for each item of the focal length f' of the virtual camera, the output resolution Rd, the kind of virtual viewpoint path, and the allowable blur amount b'. Here, the locus of movement of the virtual camera is assumed to be a curve, such as a circle and an ellipse, and therefore, as the kind of virtual viewpoint path, a clockwise path and a counterclockwise path are prepared. Further, it is difficult for a use to instinctively determine a numerical value for the allowable blur amount, and therefore, a method is employed in which, for example, alternatives at three levels, such as "large", "standard", and "small", are displayed to cause a user to select and a specific numerical value corresponding to the user selection is allocated in the generation condition setting unit 305. It may also be possible to delete or add the item and contents within the item in accordance with the necessity, or to provide a slide bar or a radio button in place of the pulldown menu. A "Virtual gaze point setting" button 1110 is a button to set a virtual gaze point and a "Start point/end point setting" button 1120 is a button to set the start point and end point of a virtual viewpoint, respectively. In the case where these buttons are pressed down, a state is brought about where it is possible to specify a position within the camera work setting area 1101 and a user specifies a virtual gaze point or the start point and the end point of a virtual viewpoint by using, for example, a mouse and the like. An "OK" button 1130 and a "Cancel" button 1140 are buttons for a user to fix the specified/selected contents and to cancel them, respectively.

Then, in the case where an arbitrary point (position) within the camera work setting area 1101 is specified as a virtual gaze point by a user, at step 1002, the GUI control unit 901 sends information thereon to the virtual gaze point setting unit 301. Based on the received information, the virtual gaze point setting unit 301 sets the position of the virtual gaze point. Here, it is assumed that the position of the object 222 in FIG. 2A is set as a position 1103 of the virtual gaze point. Similarly, for the generation conditions also, based on the information on the user selection, which is received from the GUI control unit 901, the generation condition setting unit302 sets the contents of each item of the focal length f' of the virtual camera, the output resolution Rd, the kind of virtual viewpoint, and the allowable blur amount b'.

At step 1003, the image capturing parameters of the cameras 201 to 210 are acquired in the image capturing parameter acquisition unit 303 and the multi-viewpoint video image data captured by the camera 201 to 210 is acquired in the multi-viewpoint video image acquisition unit 308, respectively.

At step 1004, in the blur amount derivation unit 304, based on the image capturing parameters acquired at step 1003, the blur amount at the virtual gaze point set at step 1002 is derived for the multi-viewpoint video image data acquired at step 1003.

At step 1005, in the limit distance derivation unit 903, for each direction on the xy-plane viewed from the virtual gaze point set at step 1002, the limit distance that can be approached by the virtual viewpoint is derived. This limit distance is derived within the limit thereof so that the blur amount in the generation-target virtual viewpoint video image does not exceed the allowable blur amount set at step 1002. Specifically, for each direction viewed from the set virtual gaze point, first, by using expression (6) and expression (7) described previously, a reference image is selected and following this, by using expression (8) described previously, the limit distance d' is found. That is, in the first embodiment, the limit focal length at the virtual viewpoint position (virtual camera) is found by taking the distance d' from the virtual viewpoint position to the virtual gaze point to be a fixed value, but in the present embodiment, the limit distance d' that can be approached by the virtual camera is found by taking the focal length f' of the virtual camera to be a fixed value. The information on the limit distance d' derived for each direction viewed from the virtual gaze point is sent to the GUI control unit 901. The GUI control unit 901 plots the limit distance value for each direction with the virtual gaze point position 1103 as a center to show the limit distance values in a figure and displays the figure within the camera work setting area 1101. In FIG. 11, an ellipse 1104 indicated by a dot line within the camera work setting area 1101 indicates the limit distances shown in a figure. It is assumed that the inside of the limit distances shown in a figure is called an "unapproachable area". In the example in FIG. 11, the virtual gaze point 1103 is shifted in the x-direction from the actual gaze point 224, and therefore, the limit distance that is derived is long in the x-direction and short in the y-direction. Because of this, in the case where the limit distance in each direction is found at intervals of sufficiently small widths, the shape after being shown in a figure will be an ellipse elongated in the x-direction. Further, what is required is to enable a user to grasp the limit distance in each direction, and therefore, for example, it may also be possible to represent the inside of the limit distance range in a different color in place of the dot line.

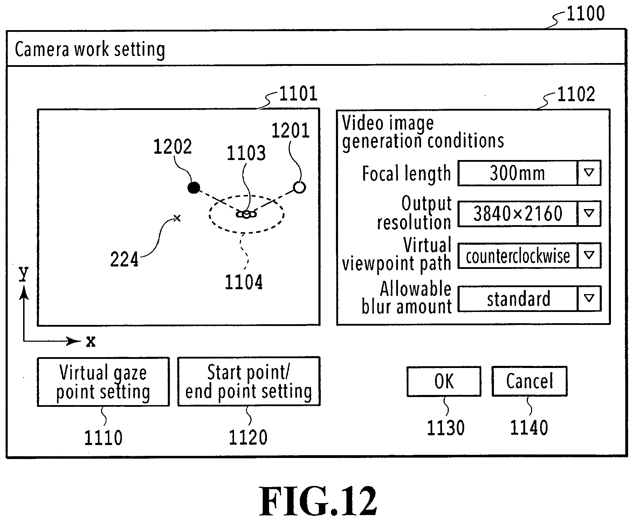

In the case where a user presses down the "Start point/end point setting" button 1120 following the above, setting bars to set the start point and the end point of a virtual viewpoint path are displayed within the camera work setting area 1101. FIG. 12 shows a state where a start point setting bar 1201 and an end point setting bar 1202 are displayed within the camera work setting area 1101. The start point setting bar 1201 and the end point setting bar 1202 are each a segment whose one end is the virtual gaze point 1103 and it is possible for a user to rotate the start point setting bar 1201 and the end point setting bar 1202 to any position with the virtual gaze point 1103 as the center axis by, for example, a drag operation. In the case where a user specifies the start point and the end point by operating these setting bars and presses down the "OK" button 1130, the specified positions (directions) are set as the start point and the end point of the virtual viewpoint path by the start point/end point setting unit 902 (step 1006). In the example in FIG. 11, "counterclockwise" is selected as the kind of virtual viewpoint in the generation condition setting area 1102, and therefore, a virtual viewpoint candidate that describes a locus counterclockwise from the direction of the specified start point to the direction of the specified end point is generated at the next step.

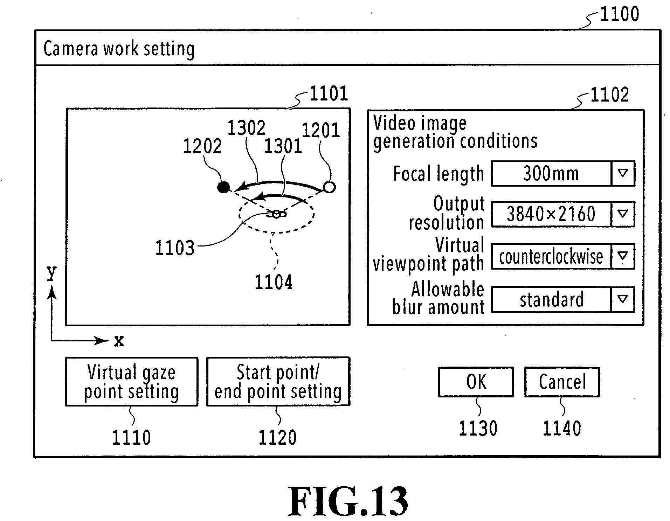

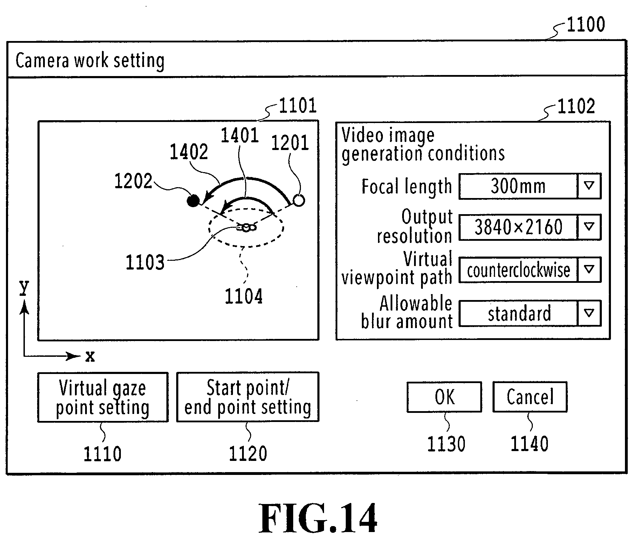

At step 1007 that follows, based on the start point and the end point set at step 1006, a plurality of virtual viewpoint candidates of a path that does not enter the above-described unapproachable area is generated by the virtual viewpoint candidate generation unit 904. Information on the generated virtual viewpoint candidates is sent to the GUI control unit 901 and displayed in the camera work setting area 1101. FIG. 13 and FIG. 14 are each a diagram showing examples of a virtual viewpoint candidate. An arrow 1301 shown in FIG. 13 indicates a virtual viewpoint candidate of a path on which the virtual camera approaches the limit distance until the limit distance is reached in all the direction between the start point and the end point that are set, and an arrow 1302 indicates a virtual viewpoint candidate that describes a locus parallel to the arrow 1301, a predetermined distance being apart from the limit distance, respectively. An arrow 1401 shown in FIG. 14 indicates a virtual viewpoint candidate whose distance between the virtual viewpoint and the virtual gaze point is constant and whose distance is made as small as possible in all the directions between the start point and the end point that are set, and an arrow 1402 indicates a virtual viewpoint candidate in the case where the distance is made longer than that indicated by the arrow 1401, respectively. The virtual viewpoint candidates shown in FIG. 13 and FIG. 14 are examples and various virtual viewpoint candidates, for example, loci between these virtual viewpoint candidates, are considered. Consequently, it may also be possible to further generate and display a virtual viewpoint candidate obtained by combining loci between, for example, the arrow 1301 and the arrow 1402, or between the arrow 1401 and the arrow 1302 with appropriate coefficients based on the generated virtual viewpoint candidates.

In the case where a user selects an arbitrary virtual viewpoint candidate from among the plurality of virtual viewpoint candidates displayed in the camera work setting area 1101 by using a mouse and the like, information thereon is sent to the virtual viewpoint setting unit 302 via the GUI control unit 901. The virtual viewpoint setting unit 302 sets the virtual viewpoint candidate according to the user selection as a virtual viewpoint that is used for virtual viewpoint video image generation (step 1008). The information on the set virtual viewpoint is sent to the camera work setting unit 307.

At step 1009, in the camera work setting unit 307, a camera work is set based on the virtual viewpoint set at step 1008. Then, at step 1010, by the virtual viewpoint video image generation unit 309, a virtual viewpoint video image is generated based on the camera work set at step 1008 and the multi-viewpoint video image data acquired at step 1002.

The above is the contents of the virtual viewpoint video image generation processing according to the present embodiment. In the case where a user changes the generation conditions in the generation condition setting area 1102 during the processing at steps 1005 to 1007 described above, it is desirable for the processing to return to step 1004 and for the processing to extract a blur amount at the virtual gaze point to be performed again. Further, in the case where a user changes the kind of virtual viewpoint (for example, counterclockwise is changed to clockwise) at step 1007, it may also be possible to generate a virtual viewpoint candidate in accordance with the contents after the change, or to generate a virtual viewpoint candidate in the opposite direction by exchanging the roles of the start point setting bar 1201 and the end point setting bar 1202.

As described above, as in the first embodiment, in the present embodiment also, it is possible to suppress the occurrence of a blur that gives a feeling of incongruity to a user in the case where a virtual viewpoint video image is generated from multi-viewpoint video image data. Further, in the case of the present embodiment, it is made possible to set a camera work with a high degree of freedom while reducing the burden of a user.

In the preceding embodiments, as the path of a virtual viewpoint, a circle (including an ellipse) or part thereof is used, but the path of a virtual viewpoint is not limited to this. For example, in the first embodiment also, it may also be possible to set a camera work by separately providing a start point/endpoint setting unit, setting a virtual viewpoint of a straight line path connecting the start point and the end point specified by a user, and deriving the limit focal length at each position on the straight line path. Alternatively, in the second embodiment, it may also be possible to design the configuration so that it is made possible to select "straight line" as the kind of "Virtual viewpoint path" in the generation condition setting area 1102 within the UI screen 1100 and the virtual viewpoint of a straight line path connecting the start point and the end point is set by a user specifying the start point and the end point of "straight line". At this time, it may also be possible to design the configuration so that a warning is issued in the case where the straight line connecting the start point and the end point that are specified intersects with the unapproachable area or a straight line that is deformed so as not to intersect with the unapproachable area is presented to a user as a virtual viewpoint candidate.

According to the present embodiment, even in the case where the blur in an object area differs between captured images included in a multi-viewpoint video image, it is possible to generate a virtual viewpoint video image that does not give a feeling of incongruity to a viewer.


(Other embodiments)

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment (s) and/or that includes one or more circuits (e.g., application specific integrated circuit (ASIC)) for performing the functions of one or more of the above-described embodiment (s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.


**Claims**

1. A setting apparatus (100) that sets a movement path of a virtual viewpoint, the setting apparatus comprising:

a specification unit (301,302) configured to specify one or a plurality of virtual viewpoints and an object of interest; and

a setting unit (306, 307) configured to set, based on the one or the plurality of virtual viewpoints and the object of interest specified by the specification unit, the movement path of the virtual viewpoint such that a difference of image quality between objects of interest falls within a predetermined range, the object of interest existing in each of a plurality of virtual viewpoint images generated in accordance with the movement path of the virtual viewpoint.

2. The setting apparatus according to claim 1, comprising:

a generation unit configured to generate a virtual viewpoint image in accordance with the movement path of the virtual viewpoint set by the setting unit.

3. The setting apparatus according to claim 1, wherein
the specification unit further specifies a parameter relating to image quality of the virtual viewpoint image, and
the setting unit sets the movement path of the virtual viewpoint based on the one or the plurality of virtual viewpoints, the object of interest, and the parameter relating to image quality.

4. The setting apparatus according to claim 1, wherein,
the specification unit further specifies a type of movement path of a virtual viewpoint, and
the setting unit sets the movement path of the virtual viewpoint based on the one or the plurality of virtual viewpoints, the object of interest, and the type of movement path.

5. The setting apparatus according to claim 3, wherein
the parameter relating to image quality specified by the specification unit represents the lowest image quality, and
the setting unit sets the movement path such that image quality of the object of interest in each of a plurality of virtual viewpoint images generated in accordance with the movement path of the virtual viewpoint becomes higher than the lowest image quality.

6. The setting apparatus according to claim 5, wherein
the image quality of the object of interest is derived based on a focus position on an optical axis of each of a plurality of cameras and a position of the object of interest.

7. The setting apparatus according to claim 5, wherein
the setting unit sets the movement path such that the image quality of the object of interest in each of the plurality of virtual viewpoint images becomes higher than the lowest image quality and the size of the object of interest becomes substantially the same.

8. A setting method of a movement path of a virtual viewpoint, the setting method comprising:

specifying one or a plurality of virtual viewpoints and an object of interest; and
setting, based on the one or the plurality of virtual viewpoints and the object of interest that are specified, the movement path of the virtual viewpoint such that a difference of image quality between objects of interest falls within a predetermined range, the object of interest existing in each of a plurality of virtual viewpoint images generated in accordance with the movement path of the virtual viewpoint.

9. The setting method according to claim 8, further comprising:

generating a virtual viewpoint image in accordance with the set movement path of the virtual viewpoint.

10. The setting method according to claim 8, wherein
in the specifying, a parameter relating to image quality of the virtual viewpoint image is further specified, and
in the setting, the movement path of the virtual viewpoint is set based on the one or the plurality of virtual viewpoints, the object of interest, and the parameter relating to image quality.

11. A program for causing a computer to perform a setting method of a movement path of a virtual viewpoint, the setting method comprising:

specifying one or a plurality of virtual viewpoints and an object of interest; and

setting, based on the one or the plurality of virtual viewpoints and the object of interest that are specified, the movement path of the virtual viewpoint such that a difference of image quality between objects of interest falls within a predetermined range, the object of interest existing in each of a plurality of virtual viewpoint images generated in accordance with the movement path of the virtual viewpoint.

12. The program according to claim 11, wherein
the setting method further comprising:

generating a virtual viewpoint image in accordance with the set movement path of the virtual viewpoint.

13. The program according to claim 11, wherein
in the specifying, a parameter relating to image quality of the virtual viewpoint image is further specified, and
in the setting, the movement path of the virtual viewpoint is set based on the one or the plurality of virtual viewpoints, the object of interest, and the parameter relating to image quality.

100

IMAGE PROCESSING APPARATUS

101          102          103          104

CPU          RAM          ROM          HDD

106

105

INPUT/OUTPUT I/F

201~210          111          110

CAMERA          EXTERNAL
MEMORY          DISPLAY
OPERATION
UNIT

# FIG.1

**FIG.2A**

**FIG.2B**

FIG.3

**FIG.4A**

**FIG.4B**

FIG.5A

FIG.5B

VIRTUAL CAMERA 502   222

VIRTUAL CAMERA 503   222

VIRTUAL CAMERA 504   222

# FIG.6

START

S701

ACQUIRE MULTI-VIEWPOINT VIDEO IMAGE
AND IMAGE CAPTURING PARAMETERS

S702

SET VIRTUAL GAZE POINT,
VIRTUAL VIEWPOINT,
AND GENERATION CONDITIONS

S703

DERIVE BLUR AMOUNT
IN MULTI-VIEWPOINT VIDEO IMAGE

S704

DERIVE LIMIT FOCAL LENGTH
AT VIRTUAL VIEWPOINT POSITION
OF INTEREST

S706

UPDATE VIRTUAL VIEWPOINT
POSITION OF INTEREST

S705

IS THERE
UNPROCESSED VIRTUAL
VIEWPOINT
POSITION?

NO

YES

S707

SET CAMERA WORK

S708

GENERATE VIRTUAL VIEWPOINT
VIDEO IMAGE BASED ON
CAMERA WORK

END

# FIG.7

VIRTUAL
CAMERA
502    222

VIRTUAL
CAMERA
503    222

VIRTUAL
CAMERA
504    222

## FIG.8A

VIRTUAL
CAMERA
502    222

VIRTUAL
CAMERA
503    222

VIRTUAL
CAMERA
504    222

## FIG.8B

**FIG.9**

START

DISPLAY CAMERA WORK SETTING SCREEN ⟋S1001

SET VIRTUAL GAZE POINT
AND GENERATION CONDITIONS ⟋S1002

ACQUIRE MULTI-VIEWPOINT VIDEO IMAGE DATA
AND IMAGE CAPTURING PARAMETERS ⟋S1003

DERIVE BLUR AMOUNT AT VIRTUAL GAZE POINT ⟋S1004

DERIVE AND DISPLAY LIMIT DISTANCE ⟋S1005

SET DIRECTIONS OF START POINT
AND END POINT OF VIRTUAL VIEWPOINT ⟋S1006

GENERATE AND DISPLAY
VIRTUAL VIEWPOINT CANDIDATE ⟋S1007

SET VIRTUAL VIEWPOINT BASED ON
USER SELECTION ⟋S1008

SET CAMERA WORK ⟋S1009

GENERATE VIRTUAL VIEWPOINT VIDEO IMAGE BASED ON
CAMERA WORK ⟋S1010

END

FIG.10

1100

## Camera work setting

1101

1103

224

1104

x

y

x

Virtual gaze point setting

1110

Start point/ end point setting

1120

1102

Video image generation conditions

Focal length | 300mm ▽

Output resolution | 3840×2160 ▽

Virtual viewpoint path | counterclockwise ▽

Allowable blur amount | standard ▽

OK

1130

Cancel

1140

# FIG.11

1100

Camera work setting

1101

1102

1202  1103  1201

224

y

x

1104

Video image
generation conditions

Focal length | 300mm | ▽

Output
resolution | 3840×2160 | ▽

Virtual
viewpoint path | counterclockwise | ▽

Allowable
blur amount | standard | ▽

| Virtual gaze point setting | Start point/ end point setting |

1110  1120

| OK | Cancel |

1130  1140

# FIG.12

**Camera work setting** — 1100

1101

1302 1301 1201
1202

1103

1104

y

x

Virtual gaze point setting — 1110

Start point/ end point setting — 1120

1102

Video image generation conditions

Focal length [ 300mm ▽ ]

Output resolution [ 3840×2160 ▽ ]

Virtual viewpoint path [ counterclockwise ▽ ]

Allowable blur amount [ standard ▽ ]

[ OK ] — 1130    [ Cancel ] — 1140

# FIG.13

1100

**Camera work setting**

1101

1401  1201
1402
1202
1201

1103
1104

Y
X

Virtual gaze point setting
1110

Start point/ end point setting
1120

1102

Video image generation conditions

Focal length | 300mm | ▽

Output resolution | 3840×2160 | ▽

Virtual viewpoint path | counterclockwise | ▽

Allowable blur amount | standard | ▽

OK
1130

Cancel
1140

# FIG.14

Europäisches
Patentamt

European
Patent Office

Office européen
des brevets

# EUROPEAN SEARCH REPORT

Application Number

EP 17 00 2070

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/267343 A1 (ARCAS BLAISE AGUERA Y [US] ET AL) 18 September 2014 (2014-09-18) * abstract * * paragraph [0005] * ----- | 1-13 | INV. G06T19/00 G06T15/20 |
| A | US 2012/127169 A1 (BARCAY DANIEL [US] ET AL) 24 May 2012 (2012-05-24) * abstract * ----- | 1-13 | |
| A | KILNER J ET AL: "Objective Quality Assessment in Free-Viewpoint Video Production", 3DTV CONFERENCE: THE TRUE VISION - CAPTURE, TRANSMISSION AND DISPLAY OF 3D VIDEO, 2008, IEEE, PISCATAWAY, NJ, USA, 28 May 2008 (2008-05-28), pages 225-228, XP032392567, DOI: 10.1109/3DTV.2008.4547849 ISBN: 978-1-4244-1760-5 * abstract * ----- | 1-13 | |

TECHNICAL FIELDS
SEARCHED (IPC)

G06T

The present search report has been drawn up for all claims

| Place of search | Date of completion of the search | Examiner |
|---|---|---|
| Berlin | 26 April 2018 | Gao, Miao |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 00 2070

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2018

| Patent document cited in search report | Publication date | Patent family member(s) | Publication date |
|---|---|---|---|
| US 2014267343 A1 | 18-09-2014 | AU 2014240544 A1<br>CA 2906437 A1<br>US 2014267343 A1<br>WO 2014159483 A2 | 01-10-2015<br>02-10-2014<br>18-09-2014<br>02-10-2014 |
| US 2012127169 A1 | 24-05-2012 | AU 2011332885 A1<br>CA 2818695 A1<br>DE 202011110924 U1<br>EP 2643822 A2<br>JP 5899232 B2<br>JP 2014503882 A<br>US 2012127169 A1<br>WO 2012071445 A2 | 13-06-2013<br>31-05-2012<br>25-04-2017<br>02-10-2013<br>06-04-2016<br>13-02-2014<br>24-05-2012<br>31-05-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010020487 A

**Non-patent literature cited in the description**

- **Z. ZHANG.** A flexible new technique for camera calibration. *IEEE Transactions on Pattern Analysis and Machine Intelligence,* 2000, vol. 22 (11), 1330-1334

- **OLIVER GRAU.** A Robust Free-Viewpoint System VIDEO for Sport Scenes. *Proceeding of 3D TV conference,* 2007